# EUROPÄISCHE PATENTSCHRIFT

(11) **EP 3 561 348 B1**
(45) Veröffentlichungstag und Bekanntmachung des Hinweises auf die Patenterteilung: **15.05.2024**
(21) Anmeldenummer: 19170731.4
(22) Anmeldetag: 24.04.2019
(51) Int. Cl.: F16K 31/05, F16K 27/06, F16K 31/04

(54) **ADAPTER ZUM ANSCHLIESSEN EINES ANTRIEBSMITTELS AN EINEN MANUELL BETÄTIGBAREN ABSPERRHAHN UND SYSTEM AUS EINEM SOLCHEN ADAPTER UND EINEM MANUELL BETÄTIGBAREN ABSPERRHAHN**
ADAPTER FOR CONNECTING A DRIVE MEANS TO A MANUALLY OPERATED SHUT-OFF VALVE AND SYSTEM COMPRISING SUCH AN ADAPTER AND A MANUALLY ACTUATED SHUT-OFF VALVE
ADAPTATEUR DE RACCORDEMENT D'UN MOYEN D'ENTRAÎNEMENT À UN ROBINET D'ARRÊT ACTIONNÉ MANUELLEMENT ET SYSTÈME COMPOSÉ D'UN TEL ADAPTATEUR ET D'UN ROBINET D'ARRÊT ACTIONNÉ MANUELLEMENT

(30) Priorität: 24.04.2018 DE 102018109792
(43) Veröffentlichungstag der Anmeldung: 30.10.2019
(73) Patentinhaber: Viega Technology GmbH & Co. KG, 57439 Attendorn (DE)
(72) Erfinder: Winterholler, Arthur, 57439 Attendorn (DE); Stähler, Ben, 57223 Kreuztal (DE)
(74) Vertreter: Cohausz & Florack

(56) Entgegenhaltungen:
- EP-A1- 1 715 233
- US-A1- 2012 068 099
- US-A1- 2016 025 227
- US-B1- 6 748 967

## Beschreibung

Die Erfindung betrifft einen Adapter zum Anschließen eines Antriebsmittels an einen manuell betätigbaren Absperrhahn, insbesondere einen Kugelhahn. Des Weiteren betrifft die Erfindung ein System aus einem solchen Adapter und einem manuell betätigbaren Absperrhahn.

Aus dem Stand der Technik sind Absperrhähne mit einer manuell oder einer automatisch betätigbaren Schaltung zum Sperren oder Freigeben des Durchflusses von Fluiden in einer Rohrleitung bekannt.

Manuell betätigbare Absperrhähne sehen zum Freigeben und Sperren des Durchflusses einen auf eine Steuerwelle montierten Handhebel vor. Die Position des Handhebels zur Freigabe oder Sperrung des Durchflusses ist oft durch im oder am Gehäuse integrierte Anschlagnocken bestimmt, deren Anordnung den genannten Positionen entspricht. Zur Freigabe oder Sperrung des Durchflusses wird der Handhebel zwischen den Anschlagnocken hin- und herbewegt. Zumeist lassen sich manuell betätigbare Absperrhähne in die Positionen Freigabe und Sperrung bringen, wobei auch Zwischenstellungen, das heißt Positionen des Handhebels zwischen den Anschlagnocken, möglich sind. Meistens ist ein genaues Einstellen des Durchflusses dabei nur in den Positionen Freigabe und Sperrung des Absperrhahns erreichbar, da aufgrund der Schaltung mit einem Handhebel eine feinere Regelung des Durchflusses oft nicht in genauer und reproduzierbarer Weise realisierbar ist.

Automatisch betätigbare Absperrhähne bedienen sich bei der Schaltung zwischen Sperrung und Freigabe der Durchströmung eines regelbaren Stellantriebs, der die Steuerwelle des Absperrhahns antreibt. Zur Gewährleistung einer sicheren Montage des Stellantriebs an den Absperrhahn werden diese Absperrhähne bereits in integrierter Bauform mit einem Anschlussflansch oder einer Anschlussstelle für einen Stellantrieb mit Flansch nach Norm DIN ISO 5211 ausgeführt. Der Anschlussflansch oder die Anschlussstelle für einen Flansch zur Montage eines Antriebs ist dabei konstruktiv im Gehäuse des Absperrhahns vorgesehen und bereits verbaut bzw. einstückig damit ausgebildet. Demnach besitzt das Gehäuse eines automatisch betätigbaren Absperrhahns bereits eine Schnittstelle für den regelbaren Stellantrieb.

Im Zuge der Modernisierung von Gebäuden soll in der Regel deren Automatisierungsgrad gesteigert werden. Oft müssen dabei auch Rohrleitungsinstallationen automatisiert werden und demgemäß mit einem regelbaren Antrieb ausgerüstet werden. Derzeit bedeutet dies, dass die in bestehenden Systemen verbauten manuell betätigbaren Absperrhähne einer Rohrleitungsinstallation durch automatisch betätigbare Absperrhähne, das heißt bereits als integriertes Bauteil ausgelegte Absperrhähne, ersetzt werden. Diese Maßnahme ist erforderlich, unabhängig davon, wie modern die Installation ist. Bei einer derartigen Modernisierung der Installation von Rohrleitungssystemen ist eine komplette Neuanschaffung der automatisch betätigbaren Absperrhähne unumgänglich und mit einem erhöhten Kostenaufwand verbunden.

Die US 6 748 967 B1 offenbart eine Kupplung, welche die Verbindung unterschiedlicher Aktuatoren mit unterschiedlichen Ventilen ermöglichen soll.

Die US 2012/068099 A1 offenbart ein zweiteiliges Ventils, welches durch eine Klemme zusammengehalten wird.

Die US 2016/025227 A1 offenbart einen Verbindungsmechanismus für die Verbindung eines Ventils mit einem Aktuator.

Die EP 1 715 233 A1 offenbart Verbindungsplatte zum Verbinden eines Aktuators mit einem Ventil.

Davon ausgehend liegt der Erfindung die Aufgabe zugrunde, einen Adapter sowie ein System der eingangs genannten Art anzugeben, der bzw. das bereits bestehende Installationen erweitert, und insbesondere einfach zu positionieren und montieren ist.

Die zuvor aufgezeigte Aufgabe wird erfindungsgemäß durch einen eingangs genannten Adapter mit einem Flansch und mit einem Befestigungsabschnitt gelöst, wobei der Befestigungsabschnitt zum Befestigen des Antriebsmittels vorgesehen ist und wobei der Flansch Mittel zum Befestigen am Absperrhahn aufweist, um den Flansch gegen eine Bewegung relativ zum Absperrhahn zu sichern. In bevorzugter Weise sind die Mittel zum Befestigen durch eine Innenkontur des Flansches ausgebildet, um an einer dazu korrespondierenden Außenkontur des Schaltungsbereichs eines manuellen Absperrhahns festlegbar zu sein.

Der beschriebene Adapter zum Anschließen eines Antriebsmittels an einen manuell betätigbaren Absperrhahn dient somit der Befestigung des Antriebsmittels an den Absperrhahn. Der Adapter ist zum einen fest mit dem Absperrhahn und zum anderen fest mit dem Antriebsmittel verbunden, wodurch auch eine Verbindung zwischen dem Antriebsmittel und dem Absperrhahn entsteht.

Das Antriebsmittel ist dazu vorgesehen im montierten Zustand den manuell betätigbaren Absperrhahn anzutreiben. Bei dem Antriebsmittel kann es sich beispielsweise um einen regelbaren pneumatischen oder elektrischen Antrieb handeln.

Mittels eines Befestigungsabschnitts wird das Antriebsmittel an dem Adapter befestigt, um die Position des Antriebsmittels im montierten Zustand zu fixieren und die Verbindung zwischen Antriebsmittel und manuell betätigbaren Absperrhahn sicher zu stellen.

Die erfindungsgemäße Lösung ermöglicht somit eine schnelle und sichere Positionierung des Adapters an einen manuell betätigbaren Absperrhahn, indem die Innenkontur des Flansches mit einer Außenkontur des Schaltungsbereichs eines manuell betätigbaren Absperrhahns korrespondiert. Außerdem ermöglicht diese Lösung ein System von Komponenten, deren Anzahl an Varianten gering ist. Denn es kann für alle manuellen als auch motorisch angetriebenen Varianten von Absperrhähnen die gleiche Basiskomponente eingesetzt werden, die mittels des Adapters für einen motorischen Antrieb aufgerüstet werden oder aber ohne Aufrüstung als rein manueller Absperrhahn eingesetzt werden kann.

Die Außenkontur des Schaltungsbereichs des Absperrhahns entspricht dabei einem Teil des Absperrhahngehäuses, das die Steuerwelle zwischen dem Absperrkörper im Inneren des Absperrhahns und dem Handhebel umgibt. Die Innenkontur des Flansches entspricht dabei im Wesentlichen der Außenkontur des Schaltungsbereichs des manuell betätigbaren Absperrhahns. Dies ermöglicht einen optimalen Formschluss zwischen Adapter und Absperrhahn, wodurch der Adapter gegen eine Bewegung relativ zum Absperrhahn gesichert ist. Eine Bewegung relativ zum Absperrhahn umfasst dabei eine horizontale oder vertikale Bewegung, eine Verdrehung oder eine Überlagerung dieser Bewegungen. Im montierten Zustand kann zwischen dem Flansch und dem manuellen Absperrhahn ein geringes Spiel vorhanden sein.

Vor der Montage des Adapters wird der Handhebel entfernt, so dass im fertig montierten Zustand die Steuerwelle oberhalb des Flansches frei liegt und weiterhin frei drehbar ist. Ist der Adapter montiert, ist das Antriebsmittel an die freiliegende Steuerwelle des Absperrhahns anschließbar.

Erfindungsgemäß weist die Innenkontur des Flansches Vertiefungen auf, wobei die Vertiefungen dazu geeignet sind, Anschlagnocken des Schaltungsbereichs des Absperrhahns aufzunehmen.

Durch die Vertiefungen der Innenkontur des Flansches wird der Adapter zumindest teilweise an den Schaltungsbereich des Absperrhahns angepasst und kann dessen Anschlagnocken aufnehmen. Vorzugsweise liegen zumindest zwei Vertiefungen in der Innenkontur des Flansches vor. Vorteilhafterweise sind die Vertiefungen einander gegenüberliegend angeordnet. Durch die Aufnahme der Anschlagnocken in die Vertiefungen der Innenkontur des Adapters wird der Adapter zusätzlich gegen eine Bewegung relativ zum Absperrhahn gesichert. Des Weiteren legen die Vertiefungen und die dazu korrespondierenden Anschlagnocken die Position des Adapters an dem Absperrhahn fest. Dies lässt eine einfache Positionierung des Adapters zu.

Erfindungsgemäß weist der Flansch zwei Teilflansche auf.

Bevorzugt werden diese Teilflansche als Gleichteile ausgeführt. Eine derartige Gestaltung des Adapters verbessert zum einen die Handhabbarkeit des Adapters bei der Montage als auch die Montage selbst. Dies ist insbesondere dann von Vorteil, wenn der Adapter zum Anschließen eines Antriebsmittels an bereits existierenden Rohrleitungsinstallationen verwendet wird. Vorteilhafterweise lassen sich derartige Teilflansche einfacher fertigen und reduzieren somit den Fertigungsaufwand. Um ein einfaches und sicheres Zusammenfügen der Teilflansche zu gewährleisten, kann es von Vorteil sein an einer Innenfläche eines Teilflansches einen Führungsbolzen und an der Innenfläche des gegenüberliegende Teilflansches eine Vertiefung vorzusehen, welche den Führungsbolzen aufnehmen kann.

Eine weitere vorteilhafte Ausgestaltung der vorliegenden Erfindung sieht vor, dass die Teilflansche symmetrisch, insbesondere spiegelsymmetrisch, ausgebildet sind.

Durch eine symmetrische Ausgestaltung der Teilflansche kann die Anzahl der Bauteilvarianten reduziert werden. Dies reduziert wiederum den Fertigungsaufwand und die Fertigungskosten.

Nach einer weiteren vorteilhaften Ausgestaltung der Erfindung sind Verbindungsmittel zum kraft- und/oder formschlüssigen Verbinden der Teilflansche vorgesehen.

Über die Verbindungsmittel werden die Teilflansche miteinander zu dem Flansch verbunden und fügen somit den Adapter zusammen. Durch die Ausführung der Verbindung als kraft- und/oder formschlüssige Verbindung werden die Teilflansche fest miteinander verbunden. Diese Art der Verbindung gewährleistet zusätzlich, dass der Adapter fest gegen den Absperrhahn verspannt werden kann, um so die Bewegungsfreiheit des Adapters relativ zum Absperrhahn weiter einzuschränken. Vorteilhafterweise ist die Verbindung der Verbindungsmittel lösbar, so dass eine Demontage der Teilflansche ohne weiteres möglich ist. Eine derartige Verbindung der Teilflansche miteinander kann beispielsweise durch Verschrauben, Verclipsen oder Verspannen mithilfe von Spannklammern hergestellt werden.

Eine weitere vorteilhafte Ausgestaltung des beschriebenen Adapters sieht vor, dass eine Innenkontur des Befestigungsabschnitts einen größeren Durchmesser als die Innenkontur des Flansches aufweist und dass die Innenkontur des Befestigungsabschnitts dazu geeignet ist, das Antriebsmittel zumindest teilweise aufzunehmen.

Die Innenkontur des Befestigungsabschnitts schließt direkt an die Innenkontur des Flansches an und nimmt das jeweilige Antriebsmittel zumindest teilweise auf, wodurch die Befestigung des Antriebsmittels an den Befestigungsabschnitt vereinfacht wird, da das Antriebsmittel örtlich festgelegt wird. Zusätzlich stellt die zumindest teilweise Aufnahme des Antriebsmittels in den Befestigungsabschnitt sicher, dass die freiliegende Steuerwelle des Absperrhahns und das Antriebsmittel optimal ineinander greifen können.

Das erfindungsgemäße System, mit dem die oben angegebene Aufgabe gelöst wird, umfasst einen erfindungsgemäßen Adapter, der vorzugsweise gemäß einer der oben genannten Ausgestaltungen ausgeführt ist, und einen manuell betätigbaren Absperrhahn, wobei der manuelle Absperrhahn eine zu der Innenkontur des Flansches des Adapters korrespondierenden Außenkontur des Schaltungsbereichs aufweist.

Mit dem erfindungsgemäßen System ergeben sich dieselben Vorteile, die oben in Bezug auf den erfindungsgemäßen Adapter dargelegt sind.

Eine bevorzugte Ausgestaltung des erfindungsgemäßen Systems besteht darin, dass der Adapter auf dem Absperrhahn aufgrund der Innenkontur des Flansches und mittels der Verbindungsmittel durch Aufstecken, Clipsen oder Schrauben befestigbar ist.

Die Befestigung des Adapters auf dem Absperrhahn durch Aufstecken, Clipsen oder Schrauben ermöglicht eine sichere und schnelle Montage, so dass eine schnelle Erweiterung der Rohrinstallation stattfinden kann. Beim Aufstecken wird der Adapter in Richtung der Steuerwelle auf den Absperrhahn gesteckt, bis die Innenkontur des Flansches mit der Außenkontur des Absperrhahns korrespondiert. Dabei kann einer Verdrehung des Adapters zur Arretierung auf dem Absperrhahn von Vorteil sein.

Nachfolgend wird die Erfindung anhand einer ein Ausführungsbeispiel darstellenden Zeichnung näher erläutert. Es zeigen:
- Fig. 1: eine Ansicht eines erfindungsgemäßen Adapters mit einem als Teilflansch ausgebildeten Flansch,
- Fig. 2: eine Schnittansicht des Teilflansches des erfindungsgemäßen Adapters gemäß Fig. 1 entlang der Schnittlinie II-II,
- Fig. 3: eine perspektivische Ansicht des Teilflansches gemäß der vorliegenden Erfindung,
- Fig. 4: eine Ansicht eines erfindungsgemäßen Systems mit einem Adapter gemäß der Fig. 1 bis 3 und einem Absperrhahn,
- Fig. 5: eine Schnittansicht des erfindungsgemäßen Systems gemäß Fig. 4 entlang der Schnittlinie V-V,
- Fig. 6: eine perspektivische Ansicht des erfindungsgemäßen Systems mit einem als Teilflansch ausgebildeten Adapter gemäß der vorliegenden Erfindung und einem Absperrhahn und
- Fig. 7: eine Schnittansicht nach Fig. 5 mit einem aufgesetzten Stellantrieb.

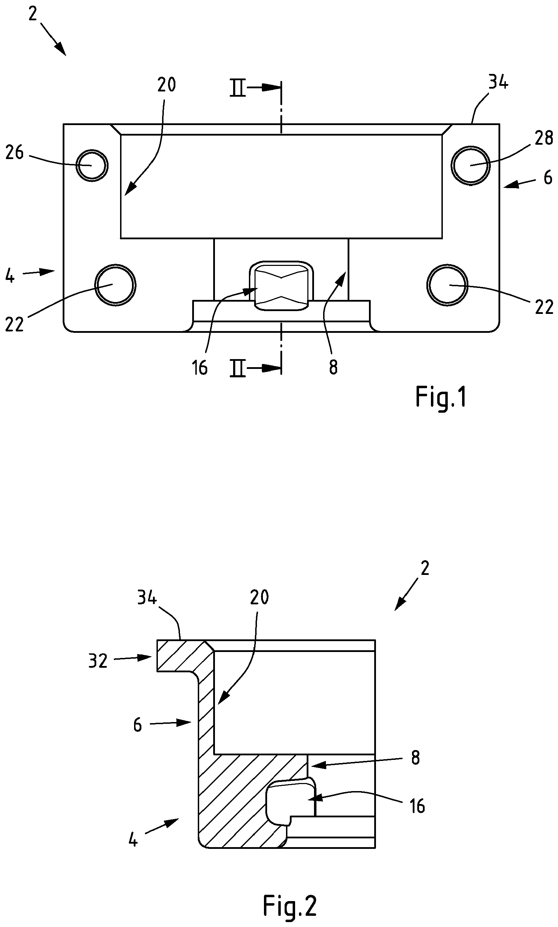

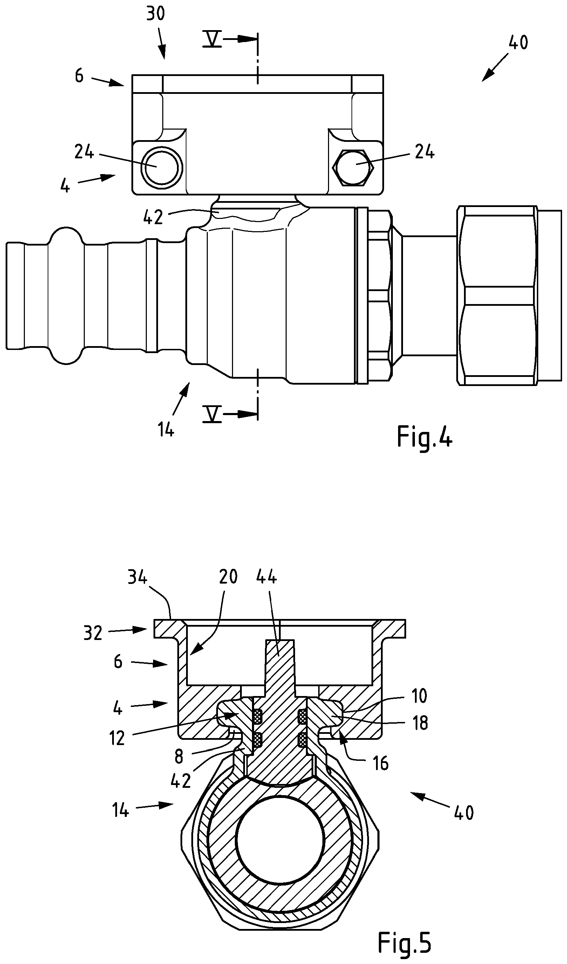

Folgend wird Bezug genommen auf einen in den Fig.1 bis 3 dargestellten Adapter sowie auf ein System gemäß der Fig. 4 bis 6, welches den montierten Zustand des Adapters gemäß der Fig. 1 bis 3 an einem Absperrhahn darstellt.

Der in Fig. 1 bis 3 dargestellte Teilflansch 2 weist einen Flansch 4 und einen oberhalb des Flansches 4 angeordneten Befestigungsabschnitt 6 auf. Eine Innenkontur 8 des Flansches 4 ist zentral im Flansch 4 angeordnet und ist dazu ausgebildet, eine korrespondierende Außenkontur 10 des Schaltungsbereichs 12 eines Absperrhahns 14 aufzunehmen. Siehe dazu die Fig. 4 bis 6, die den Adapter 2 zusammen mit dem Absperrhahn 14 zeigen.

Die Innenkontur 8 des Flansches 4 ist stufig ausgebildet und weist eine Vertiefung 16 auf, die zur Aufnahme von Anschlagnocken 18 des Schaltungsbereichs 12 des Absperrhahns 14 vorgesehen ist. Die Innenkontur 8 des Flansches 4 geht im Befestigungsabschnitt 6 in eine Innenkontur 20 des Befestigungsabschnitts 6 über, wobei die Innenkontur 20 des Befestigungsabschnitts 6 einen größeren Durchmesser aufweist als die Innenkontur 8 des Flansches 4. Die Innenkontur 20 des Befestigungsabschnitts 6 ist dabei dazu vorgesehen, das Antriebsmittel zumindest teilweise aufzunehmen.

Randseitig weist der Teilflansch 2 im Flansch 4 beidseitig Durchgangsöffnungen 22 auf. Diese Durchgangsöffnungen 22 sind dazu ausgestaltet, die Teilflansche 2 mithilfe von Verbindungsmitteln 24 miteinander form- und/oder kraftschlüssig zu verbinden.

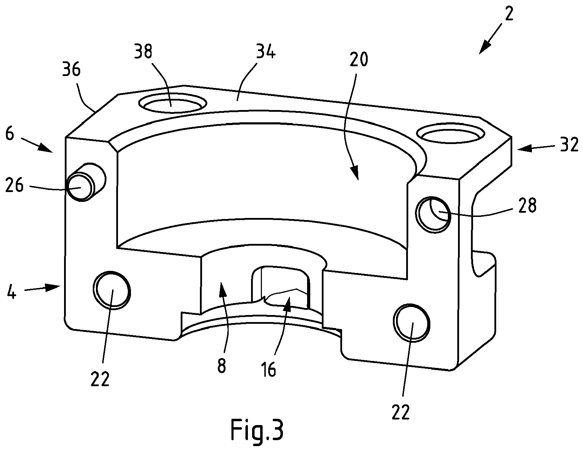

Der Bereich des Flansches 4 ist verstärkt ausgebildet, um eine sichere Verbindung gewährleisten zu können, wie in Fig. 3 dargestellt ist. Bei verschraubten Teilflanschen 2 kann es von Vorteil sein, wenn die Durchgangsöffnungen 22 an ihrem äußeren Ende so gestaltet sind, dass die verwendeten Schrauben und die dazugehörigen Muttern im Flansch 4 versenkt werden können.

Der Teilflansch 2 weist im Bereich seines Befestigungsabschnitts 6 einen Führungsbolzen 26 und eine zu dem Führungsbolzen 26 korrespondierende Aufnahme 28 des Führungsbolzens 26 auf. Der Führungsbolzen 26 und die Aufnahme 28 des Führungsbolzens 26 sind so angeordnet, dass bei dem Zusammensetzen zweier Teilflansche 2 zu dem Adapter 30 der Führungsbolzen 26 des einen Teilflansches 2 der Aufnahme 28 des Führungsbolzens 26 des anderen Teilflansches 2 gegenüberliegt und der Führungsbolzen 26 in die Aufnahme 28 eingreift.

Die Vertiefung 16 zur Aufnahme der Anschlagnocken 18, die Durchgangsöffnungen 22 zum Verbinden der Teilflansche 2 mithilfe der Verbindungsmittel 24, sowie der Führungsbolzen 26 und die dazugehörige Aufnahme 28 des Führungsbolzens 26 sind im Wesentlichen parallel zueinander ausgerichtet.

Gemäß Fig. 2 weist der Befestigungsabschnitt 6 an einen Endabschnitt 32 auf, dessen Oberseite als Ablagefläche 34 zur sicheren Ablage und Stützung des Antriebsmittels vorgesehen ist. Dieser Endabschnitt 32 kann an das Abmaß des jeweiligen Antriebsmittels angepasst werden, das gegebenenfalls genormt ist.

In einer Ausführungsform gemäß Fig. 3 weist dieser Endabschnitt 32 eine im Wesentlichen rechteckige Form auf. Die Längsseiten 36 des Endabschnitts 32 verlaufen dabei parallel zu den Durchgangsöffnungen 22 des Flansches 4. Zudem sind im Eckbereich des Endabschnitts 32 Öffnungen 38 zum Positionieren des Antriebsmittels auf dem Adapter vorgesehen. Dazu können im Montagebereich des Antriebsmittels Stutzen vorgesehen sein, welche lediglich in die Öffnungen 38 eingesetzt werden, um somit das Antriebsmittel auf dem Adapter 30 zu positionieren und gegen seitliches Verrutschen zu sichern. Jedoch können die Öffnungen 38 auch zur form- oder kraftschlüssigen Montage des Antriebsmittels auf dem Adapter 30 genutzt werden. Die Montage des Antriebsmittels kann beispielsweise durch Schrauben, Clipsen oder Stecken realisiert werden.

Das in Fig. 4 bis 6 dargestellte System 40 zeigt den Absperrhahn 14 mit dem zuvor beschriebenen erfindungsgemäßen Adapter 30 im verbauten Zustand. Die Teilflansche 2 des Adapters 30 werden um einen Schaltungsbereich 12 des Absperrhahns 14 gelegt, zusammengesteckt und zur Herstellung einer festen Verbindung miteinander verschraubt.

In Fig. 5 sind weitere Einzelheiten des erfindungsgemäßen Systems in einem Schnitt dargestellt. Der Schaltungsbereich 12 des Absperrhahns 14 weist an seinem Gehäuse 42 Anschlagnocken 18 auf, die in die dafür vorgesehenen Vertiefungen 16 der Innenkontur 8 des Flansches 4 des Adapters 30 eingreifen. Die Innenkontur 8 des Flansches 4 entspricht dabei im Wesentlichen einer Außenkontur 10 des Schaltungsbereichs 12 des Absperrhahns 14, so dass der Adapter 30 gegen eine Bewegung relativ zum Absperrhahn gesichert ist. Die Innenkontur 8 des Flansches 4 weist oberhalb des Gehäuses 42 des Schaltungsbereichs 12 des Absperrhahns 14 einen Durchmesser auf, der das Gehäuse 42 des Schaltungsbereichs 12 fest umschließt, jedoch die aus dem Gehäuse 42 des Schaltungsbereichs 12 austretende Steuerwelle 44 des Absperrhahns 14 nicht in ihrer Funktion beeinträchtigt. Die Steuerwelle 44 des Absperrhahns 14 liegt dadurch oberhalb des Flansches 4 des Adapters 30 frei und ist frei drehbar.

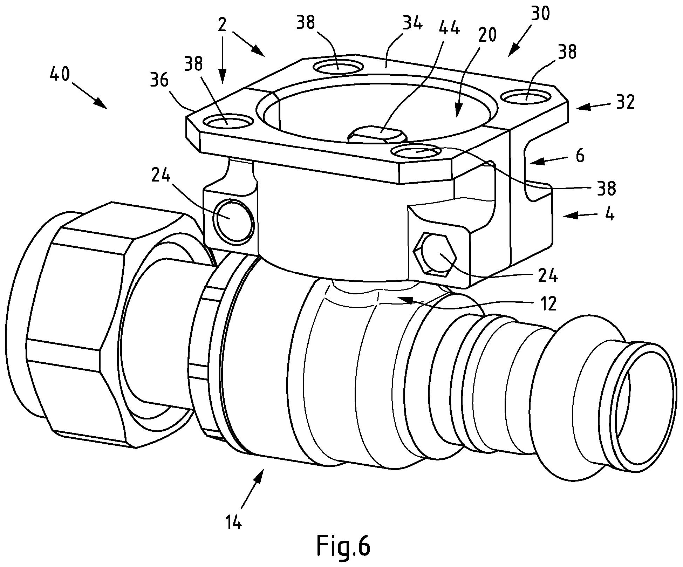

Wie sich insbesondere aus Fig. 6ergibt, weisen die beiden Teilflansche 2 den Vorteil auf, dass die aufeinanderstoßenden Seiten der Teilflansche 2 im Bereich des Flansches 4 und des Befestigungsabschnitts 6 eine Verstärkung der Wandstärke aufweisen. Eine Verstärkung der Wandstärke ist vor allem im Bereich der Durchgangsöffnungen 22 im Flansch 4 und im Bereich des Führungsbolzens 26 bzw. der Aufnahme 28 des Führungsbolzens 26 vorteilhaft, um eine feste Verspannung der Teilflansche 2 miteinander zu ermöglichen.

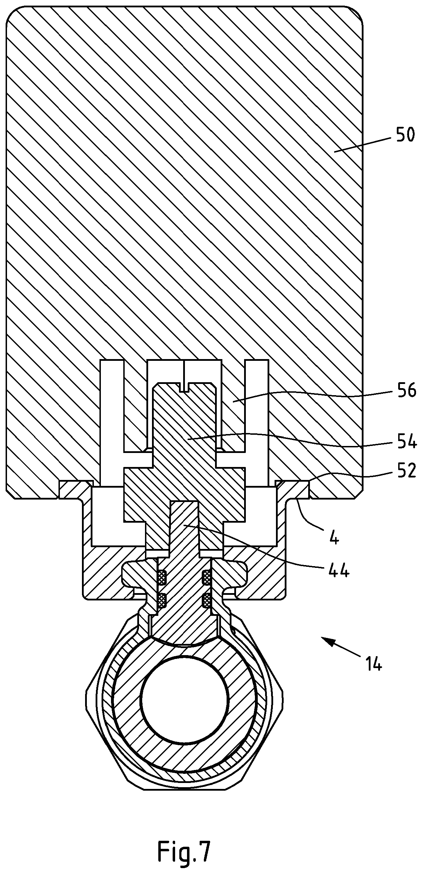

Fig. 7 zeigt schließlich eine Schnittansicht einer Anordnung nach Fig. 5 mit einem aufgesetzten Stellantrieb 50, der eine zum Flansch 4 passende Anschlusskontur 52 aufweist und darüber mit dem Adapter 2 verbunden werden kann. Für eine Übertragung der Drehbewegung auf den Absperrhahn 14 ist ein weiterer Adapter 54 vorgesehen, der einerseits mit der Abtriebswelle 56 des Stellantriebs 50 und andererseits mit der Steuerwelle 44 des Absperrhahns 14 verbunden ist.

## Patentansprüche

1. Adapter zum Anschließen eines Antriebsmittels an einen manuell betätigbaren Absperrhahn, insbesondere einen Kugelhahn,
- mit einem Flansch (4) und
- mit einem Befestigungsabschnitt (6),
- wobei der Befestigungsabschnitt (6) zum Befestigen des Antriebsmittels vorgesehen ist und
- wobei der Flansch (4) Mittel zum Befestigen am Absperrhahn (14) aufweist, um den Flansch (4) gegen eine Bewegung relativ zum Absperrhahn (14) zu sichern, **dadurch gekennzeichnet,**
- **dass** eine Innenkontur (8) des Flansches (4) Vertiefungen (16) aufweist,
- **dass** die Vertiefungen (16) geeignet sind, Anschlagnocken (18) des Schaltungsbereichs (12) des Absperrhahns (14) aufzunehmen und
- **dass** der Flansch (4) zwei Teilflansche (2) aufweist.

2. Adapter nach Anspruch 1,
**dadurch gekennzeichnet,**
**dass** die Innenkontur (8) des Flansches (4) an einer dazu korrespondierenden Außenkontur (10) des Schaltungsbereichs (12) des Absperrhahns (14) festlegbar ist.

3. Adapter nach Anspruch 1 oder 2,
**dadurch gekennzeichnet,**
**dass** die Teilflansche (2) symmetrisch, insbesondere spiegelsymmetrisch ausgebildet sind.

4. Adapter nach einem der Ansprüche 1 bis 3,
**dadurch gekennzeichnet,**
**dass** Verbindungsmittel (24) zum kraft- und/oder formschlüssigen Verbinden der Teilflansche (2) vorgesehen sind.

5. Adapter nach einem der Ansprüche 1 bis 4,
**dadurch gekennzeichnet,**
- **dass** eine Innenkontur (20) des Befestigungsabschnitts (6) einen größeren Durchmesser als die Innenkontur (8) des Flansches (4) aufweist und
- **dass** die Innenkontur (20) des Befestigungsabschnitts (6) dazu geeignet ist, das Antriebsmittel zumindest teilweise aufzunehmen.

6. System
- mit einem Adapter (30) nach einem der Ansprüche 1 bis 5 und
- mit einem manuell betätigbaren Absperrhahn (14),
- wobei der Absperrhahn (14) eine zu der Innenkontur (8) des Flansches (4) des Adapters (30) korrespondierenden Außenkontur (10) des Schaltungsbereichs (12) aufweist.

7. System nach Anspruch 6,
**dadurch gekennzeichnet,**
**dass** der Adapter (30) auf dem Absperrhahn (14) aufgrund der Innenkontur des Flansches (4) und mittels der Verbindungsmittel (24) durch Aufstecken, Clipsen oder Schrauben befestigbar ist.

## Claims

1. Adapter for connecting a drive means to a manually operated shut-off valve, in particular a ball valve,
- with a flange (4) and
- with a fastening section (6),
- wherein the fastening section (6) is provided for fastening the drive means, and
- wherein the flange (4) has means for fastening to the stopcock (14) in order to secure the flange (4) against movement relative to the stopcock (14), **characterised in**
- **that** an inner contour (8) of the flange (4) has recesses (16),
- **that** the recesses (16) are suitable for receiving stop cams (18) of the switching area (12) of the stopcock (14) and
- **that** the flange (4) has two partial flanges (2).

2. Adapter according to claim 1,
**characterised in**
**that** the inner contour (8) of the flange (4) can be fixed to a corresponding outer contour (10) of the switching area (12) of the stopcock (14).

3. Adapter according to claim 1 or 2,
**characterised in**
**that** the partial flanges (2) are symmetrical, in particular mirror-symmetrical.

4. Adapter according to one of claims 1 to 3,
**characterised in**
**that** connecting means (24) are provided for force-fit and/or form-fit connection of the partial flanges (2).

5. Adapter according to any one of claims 1 to 4,
**characterised in**
- **that** an inner contour (20) of the fastening section (6) has a larger diameter than the inner contour (8) of the flange (4), and
- **that** the inner contour (20) of the fastening section (6) is suitable for at least partially receiving the drive means.

6. System
- with an adapter (30) according to one of claims 1 to 5 and
- with a manually operated stopcock (14),
- wherein the stopcock (14) has an outer contour (10) of the switching area (12) corresponding to the inner contour (8) of the flange (4) of the adapter (30).

7. System according to claim 6,
**characterised in**
**that** the adapter (30) can be attached to the stopcock (14) on the basis of the inner contour of the flange (4) and by means of the connecting means (24) by plugging, clipping or screwing.

## Revendications

1. Adaptateur pour raccorder un moyen d'entraînement à un robinet d'arrêt à commande manuelle, en particulier un robinet à boisseau sphérique,
- avec une bride (4) et
- avec une section de fixation (6),
- la section de fixation (6) étant prévue pour fixer le moyen d'entraînement et
- la bride (4) comportant des moyens pour fixation au robinet d'arrêt (14) afin de sécuriser la bride (4) contre un mouvement par rapport au robinet d'arrêt (14), **caractérisé**
- **en ce qu'**un contour intérieur (8) de la bride (4) présente des renfoncements (16),
- **en ce que** les renfoncements (16) sont configurés pour recevoir des cames de butée (18) de la zone de commutation (12) du robinet d'arrêt (14) et
- **en ce que** la bride (4) présente deux brides partielles (2).

2. Adaptateur selon la revendication 1,
**caractérisé**
**en ce que** le contour intérieur (8) de la bride (4) peut être fixé à un contour extérieur (10) correspondant de la zone de commutation (12) du robinet d'arrêt (14).

3. Adaptateur selon la revendication 1 ou 2,
**caractérisé**
**en ce que** les brides partielles (2) sont formées de manière symétrique, en particulier avec une symétrie spéculaire.

4. Adaptateur selon l'une quelconque des revendications 1 à 3,
**caractérisé**
**en ce que** des moyens de liaison (24) sont prévus pour relier les brides partielles (2) par adhérence et/ou par complémentarité de forme.

5. Adaptateur selon l'une quelconque des revendications 1 à 4,
**caractérisé**
- **en ce qu'**un contour intérieur (20) de la section de fixation (6) présente un diamètre plus grand que le contour intérieur (8) de la bride (4), et
- **en ce que** le contour intérieur (20) de la section de fixation (6) est adapté pour recevoir au moins partiellement le moyen d'entraînement.

6. Système
- avec un adaptateur (30) selon l'une des revendications 1 à 5 et
- avec un robinet d'arrêt à commande manuelle (14),
- le robinet d'arrêt (14) présentant un contour extérieur (10) de la zone de commutation (12) correspondant au contour intérieur (8) de la bride (4) de l'adaptateur (30).

7. Système selon la revendication 6,
**caractérisé**
**en ce que** l'adaptateur (30) peut être fixé sur le robinet d'arrêt (14) sur la base du contour intérieur de la bride (4) et au moyen des moyens de liaison (24) par enfichage, clipsage ou vissage.
